(19) Europäisches Patentamt / European Patent Office / Office européen des brevets

(11) **EP 4 525 167 A1**

(12) **EUROPEAN PATENT APPLICATION**
published in accordance with Art. 153(4) EPC

(43) Date of publication:
**19.03.2025 Bulletin 2025/12**

(21) Application number: **23802600.9**

(22) Date of filing: **19.04.2023**

(51) International Patent Classification (IPC):
**H01M 50/342** *(2021.01)*      **H01M 50/249** *(2021.01)*
**H01M 50/258** *(2021.01)*

(52) Cooperative Patent Classification (CPC):
**H01M 50/249; H01M 50/258; H01M 50/342**

(86) International application number:
**PCT/CN2023/089162**

(87) International publication number:
**WO 2023/216825 (16.11.2023 Gazette 2023/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.05.2022   CN 202221128849 U**

(71) Applicant: **BYD Company Limited
Shenzhen, Guangdong 518118 (CN)**

(72) Inventors:
• **WANG, Xinyue
  Shenzhen, Guangdong 518118 (CN)**
• **YUAN, Wansong
  Shenzhen, Guangdong 518118 (CN)**
• **CHENG, Han
  Shenzhen, Guangdong 518118 (CN)**
• **PAN, Qiu
  Shenzhen, Guangdong 518118 (CN)**
• **LI, Kai
  Shenzhen, Guangdong 518118 (CN)**

(74) Representative: **Mathys & Squire
The Shard
32 London Bridge Street
London SE1 9SG (GB)**

(54) **EXPLOSION-PROOF VALVE, BATTERY, BATTERY MODULE, BATTERY PACK AND VEHICLE**

(57)     A vehicle has a battery pack. The battery pack includes batteries or a battery module. The battery module includes batteries. Each battery includes a battery casing and an explosion-proof valve. The explosion-proof valve is arranged on the battery casing. The explosion-proof valve is provided with a notch groove. The explosion-proof valve includes an opening area. **In the** depth direction of the notch groove, the shape of the orthographic projection of the opening area is non-circular. An outer edge of the orthographic projection of the opening area is a preset opening boundary, an area of the orthographic projection of the opening area being $S_1$, the area of the orthographic projection of the explosion-proof valve being $S$, $S_1$ and $S$ meeting: $S_1/S \geq 0.3$, and the units of $S_1$ and $S$ both are $mm^2$.

FIG. 3

EP 4 525 167 A1

**Description**

**CROSS-REFERENCE TO RELATED APPLICATIONS**

The present disclosure claims priority to and benefits of Chinese Patent Application No. "202221128849.3", entitled "BATTERY, BATTERY MODULE, BATTERY PACK AND VEHICLE" and filed by BYD Company Limited on May 12, 2022, which is incorporated herein by reference in its entirety.

**FIELD**

The present disclosure relates to the technical field of batteries, and in particular, to an explosion-proof valve, a battery, a battery module, a battery pack, and a vehicle.

**BACKGROUND**

In a related art, an opening area on an explosion-proof valve configured to open when a pressure is relieved is generally designed to be circular. However, a circular opening area is easily limited by a set position, and the area occupied by the opening area (that is, an open range) in the explosion-proof valve is relatively small, which easily affects a wire harness around the explosion-proof valve when the pressure is relieved, and the pressure cannot be relieved immediately, thereby increasing potential safety hazards.

**SUMMARY**

The present disclosure aims to solve at least one of the technical problems existing in a related art. Therefore, an objective of the present disclosure is to provide an explosion-proof valve, which can alleviate damage to an opening area caused by internal stress or external force and improve the reliability of the explosion-proof valve and the safety of using a battery.

The present disclosure further discloses a battery, including a battery casing and the foregoing explosion-proof valve.

The present disclosure further discloses a battery module, including the foregoing battery.

The present disclosure further discloses a battery pack, including the foregoing battery or the foregoing battery module.

The present disclosure further discloses a vehicle, including the foregoing battery pack.

According to the explosion-proof valve in an embodiment in a first aspect of the present disclosure, the explosion-proof valve is provided with a notch groove. The explosion-proof valve includes an opening area. The opening area is an area enclosed by a preset opening boundary. In the depth direction of the notch groove, the shape of the orthographic projection of the opening area is non-circular, the outer edge of the orthographic projection of the opening area is the preset opening boundary, the area of the orthographic projection of the opening area is $S_1$, the area of the orthographic projection of the explosion-proof valve is S, and $S_1$ and S meet: $S_1/S \geq 0.3$, where the units of $S_1$ and S are both $mm^2$.

According to the explosion-proof valve in the embodiment of the present disclosure, the shape of the explosion-proof valve is controlled, so that the explosion-proof valve may be applicable to different shapes of battery casings, thereby increasing an application range of the explosion-proof valve. Meanwhile, an area ratio of the area $S_1$ of the orthographic projection of the opening area to the area S of the orthographic projection of the explosion-proof valve is controlled to increase a proportion of the area of the opening area in the explosion-proof valve, so that the opening area of the explosion-proof valve is ensured, the work efficiency of the explosion-proof valve is improved, then an internal pressure can be relieved in time after a battery is damaged, the protection on the battery is increased, the cost of using the battery is reduced.

In some examples, $S_1$ and S further meet: $S_1/S \leq 0.95$.

In some examples, $S_1$ and S respectively meet: $80\ mm^2 \leq S_1 \leq 1600\ mm^2$, and $178.5\ mm^2 \leq S \leq 5212.5\ mm^2$.

In some examples, the notch groove includes two arc-shaped first notch sections arranged opposite to each other, a linear second notch section, and two linear third notch sections spaced away from each other. The second notch section and the third notch sections are arranged in parallel. Two ends of the second notch section are respectively connected to the two first notch sections. Each of the third notch sections is connected to the corresponding first notch section. In the depth direction of the notch groove, two free ends of the outer edge of the orthographic projection of the notch groove are connected to form a connection line, and the connection line and the outer edge of the orthographic projection of the notch groove form the preset opening boundary together.

In some examples, the notch groove includes two arc-shaped fourth notch sections arranged opposite to each other, and two linear fifth notch sections arranged in parallel. Two ends of each of the fifth notch sections are respectively connected to the two fourth notch sections, and the two fifth notch sections and the two fourth notch sections form a closed ring structure. In the depth direction of the notch groove, the outer edge of the orthographic projection of the notch groove forms the preset opening boundary.

In some examples, the notch groove includes a linear sixth notch section and four linear seventh notch sections. Two ends of the sixth notch section are respectively connected to two seventh notch sections, and two of the seventh notch sections are connected at a preset included angle. In the depth direction of the notch groove, a first arc is defined between free ends of orthographic projections of the two seventh notch sections located at the same end of the sixth notch section. The first arc takes a vertex of the preset included angle as a center of a circle. A first straight line is defined between the free ends of the orthographic projections of the two seventh notch sections located on the same side of the sixth notch section. The two first arcs and the two first straight lines form the preset opening boundary together.

In some examples, in the depth direction of the notch groove, the outer contour of the orthographic projection of the explosion-proof valve includes: two second straight lines arranged in parallel and two second arcs arranged opposite to each other. Two ends of each of the two second straight lines are respectively connected to the two second arcs. A length of the second straight line is $L$, a distance between the two second straight lines is $2R$, and $S$, $L$, and $R$ meet: $S = \pi R^2 + 2RL$, $10\ mm \leq L \leq 65\ mm$, and $5\ mm \leq R \leq 25\ mm$.

In some examples, in the depth direction of the notch groove, the thickness of the opening area is less than thicknesses of other parts of the explosion-proof valve.

In some examples, in the depth direction of the notch groove, the thickness of the opening area is $H_1$, and $H_1$ meets: $0.1\ mm \leq H_1 \leq 0.3\ mm$.

In some examples, in the depth direction of the notch groove, the shape of the orthographic projection of the opening area is oval, elliptical, or polygonal.

In some examples, the explosion-proof valve further includes a connection section, a buffer section, and a support section. The connection section is connected to an outer peripheral side of the support section. The support section and the connection section are spaced away along the thickness direction of the support section. The buffer section is connected between the connection section and the support section. The opening area is arranged on the support section.

In some examples, a groove is formed in the support section, and the notch groove is formed in a bottom wall of the groove.

In some examples, in the depth direction of the notch groove, the outer edge of the orthographic projection of the groove and the outer edge of the orthographic projection of the notch groove have an overlap area.

In some examples, in the depth direction of the notch groove, the thickness of the opening area corresponding to the notch groove is $H_2$, and $H_2$ meets: $0.02\ mm \leq H_2 \leq 0.2\ mm$.

In some examples, in the depth direction of the notch groove, the thickness of the support section is $H_3$, and $H_2$ and $H_3$ meet: $H_2 : H_3 = 0.1$ to $1$.

In some examples, in the depth direction of the notch groove, the thickness of the support section is $H_3$, the thickness of the connection section is $H_4$, and $H_3$ and $H_4$ meet: $H_3 : H_4 = 0.25$ to $1$.

In some examples, in the depth direction of the notch groove, the height of the explosion-proof valve is $H_5$, in the thickness direction of the buffer section, the wall thickness of the buffer section is $D_1$, and $H_5$ and $D_1$ respectively meet: $0.5\ mm \leq H_5 \leq 1.5\ mm$, and $0.2\ mm \leq D_1 \leq 0.8\ mm$.

In some examples, in the thickness direction of the buffer section, a width of the support section is $D_2$, in the depth direction of the notch groove, the thickness of the support section is $H_3$, and $D_2$ and $H_3$ respectively meet: $0.2\ mm \leq D_2 \leq 2\ mm$, and $0.2\ mm \leq H_3 \leq 0.8\ mm$.

In some examples, in the thickness direction of the buffer section, a width of the connection section is $D_3$, in the depth direction of the notch groove, the thickness of the connection section is $H_4$, and $D_3$ and $H_4$ respectively meet: $1\ mm \leq D_3 \leq 5\ mm$, and $0.2\ mm \leq H_4 \leq 0.8\ mm$.

A battery according to an embodiment in a second aspect of the present disclosure includes: a battery casing; and the explosion-proof valve according to the embodiment in the foregoing first aspect of the present disclosure. The explosion-proof valve is arranged on the battery casing.

A battery module according to an embodiment in a third aspect of the present disclosure includes the battery according to the embodiment in the foregoing second aspect of the present disclosure.

A battery pack according to an embodiment in a fourth aspect of the present disclosure includes the battery according to the embodiment in the foregoing second aspect of the present disclosure, or the battery module according to the embodiment in the foregoing third aspect of the present disclosure.

A vehicle according to an embodiment in a fifth aspect of the present disclosure includes the battery pack according to the embodiment in the foregoing fourth aspect of the present disclosure.

Additional aspects and advantages of the present disclosure will be provided in the following description, some of which will become apparent from the following description or may be learned from practices of the present disclosure.

## BRIEF DESCRIPTION OF THE DRAWINGS

The foregoing and/or additional aspects and advantages of the present disclosure will become apparent and comprehensible from the following description of the embodiments with reference to the accompanying drawings, where:

FIG. 1 is a schematic diagram of a battery according to an embodiment of the present disclosure.
FIG. 2 is a schematic diagram of an explosion-proof valve according to an embodiment of the present disclosure.
FIG. 3 is a cross-sectional view of an explosion-proof valve according to an embodiment of the present disclosure.
FIG. 4 is a schematic diagram of a C-shaped notch groove according to an embodiment of the present disclosure.
FIG. 5 is a schematic diagram of an X-shaped notch groove according to an embodiment of the present disclosure.
FIG. 6 is a schematic diagram of a Y-shaped notch groove according to an embodiment of the present disclosure.
FIG. 7 is a schematic diagram of a dual Y-shaped notch groove according to an embodiment of the present disclosure.
FIG. 8 is a schematic diagram of a comparison of pressure relief rates of batteries according to Embodiment 1 in the present disclosure and Comparative example 1 in a related art.
FIG. 9 is a schematic diagram of a comparison of pressure relief rates of batteries according to Embodiment 2 in the present disclosure and Comparative example 2 in a related art.
FIG. 10 is a schematic diagram of a comparison of pressure relief rates of batteries according to Embodiment 3 in the present disclosure and Comparative example 3 in a related art.
FIG. 11 is a schematic diagram of a comparison of pressure relief rates of batteries according to Embodiment 4 in the present disclosure and Comparative example 4 in a related art.
FIG. 12 is a schematic diagram of a comparison of pressure relief rates of batteries according to Embodiment 5 in the present disclosure and Comparative example 5 in a related art.
FIG. 13 is a schematic diagram of a comparison of pressure relief rates of batteries according to Embodiment 6 in the present disclosure and Comparative example 6 in a related art.
FIG. 14 is a schematic diagram of a preset opening boundary of the C-shaped notch groove according to an embodiment of the present disclosure.
FIG. 15 is a schematic diagram of a vehicle according to an embodiment of the present disclosure.

In the drawings:

battery 100;
battery casing 10;
explosion-proof valve 20; connection section 21; support section 22; groove 221; buffer section 23 opening area 24; preset opening boundary 241; notch groove 25; first notch section 251; second notch section 252; third notch section 253; fourth notch section 254; fifth notch section 255; sixth notch section 256; seventh notch section 257; first straight line 258; first arc 259; eighth notch section 260; ninth notch section 261; tenth notch section 262; connection line 263; second straight line 27; second arc 28;
battery module 200; battery pack 300; and vehicle 400.

## DETAILED DESCRIPTION

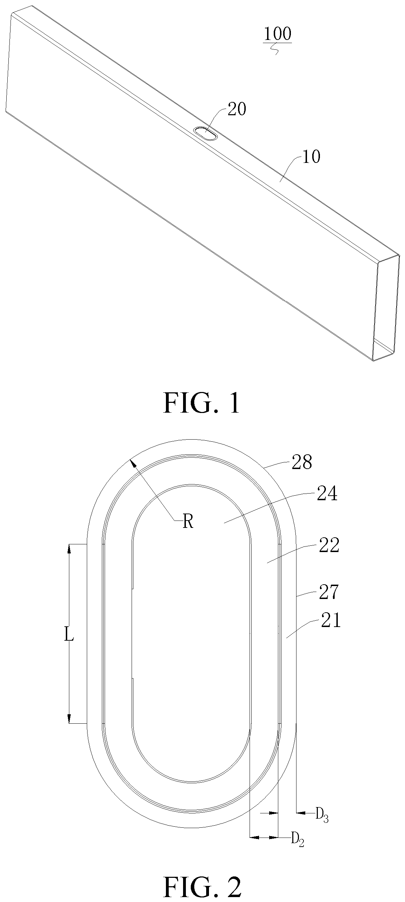

Embodiments of the present disclosure are described in detail below, and the embodiments described with reference to accompanying drawings are exemplary. An explosion-proof valve 20 according to the embodiments of the present disclosure is described below with reference to FIG. 2 to FIG. 7.

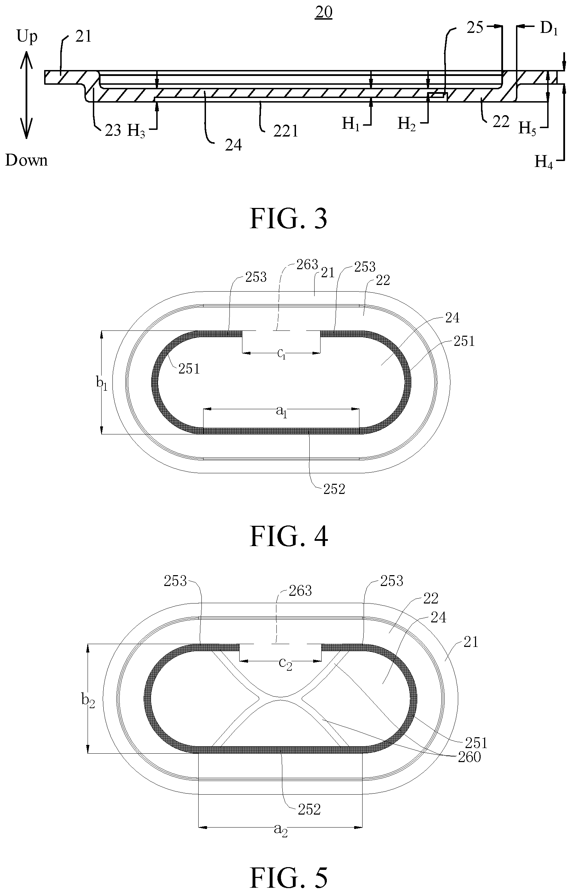

According to the explosion-proof valve 20 in an embodiment in a first aspect of the present disclosure, the explosion-proof valve 20 is provided with a notch groove 25. The explosion-proof valve 20 includes an opening area 24. In the depth direction of the notch groove 25 (that is, in a direction from a groove opening to a groove bottom of the notch groove 25), the shape of the orthographic projection of the opening area 24 is non-circular, and the outer edge of the orthographic projection of the opening area 24 is a preset opening boundary 241. The area of the orthographic projection of the opening area 24 is $S_1$, the area of the orthographic projection of the explosion-proof valve 20 is S, and $S_1$ and S meet: $S_1/S \geq 0.3$, where the units of $S_1$ and S are both $mm^2$. As shown in FIG. 3, the depth direction of the notch groove 25 is a direction from bottom to top.

The opening area 24 may be: an area reserved when the explosion-proof valve 20 is designed and configured to relieve a pressure. When the explosion-proof valve 20 is configured for a battery 100, and an internal pressure of the battery 100 is increased and needs to be relieved, the internal pressure of the battery 100 may be relieved from the opening area 24. The opening area of the opening area 24 may be ensured to be appropriate by defining a ratio of $S_1$ to S, so as to achieve pressure relief of the battery 100, thereby ensuring the pressure relief capacity of the explosion-proof valve 20, improving the use performance of the explosion-proof valve 20, and improving the use safety of the battery 100.

According to the explosion-proof valve 20 in an embodiment of the present disclosure, the shape of the explosion-proof valve 20 is controlled, so that the explosion-proof valve 20 may be applicable to different shapes of battery casings 10, thereby increasing an application range of the explosion-proof valve 20. Meanwhile, an area ratio of the area $S_1$ of the orthographic projection of the opening area 24 to the area S of the orthographic projection of the explosion-proof valve 20 is controlled to increase a proportion of the area of the opening area 24 in the explosion-proof valve 20, so that the opening area of the explosion-proof valve 20 is ensured, the work efficiency of the explosion-proof valve 20 is improved, then an internal pressure is relieved in time after a battery 100 is damaged, the protection on the battery 100 is increased, and the cost of using the battery 100 is reduced.

In some embodiments, $S_1$ and S further meet: $S_1/S \leq 0.95$, $80 \ mm^2 \leq S_1 \leq 1600 \ mm^2$, $178.5 \ mm^2 \leq S \leq 5212.5 \ mm^2$. In a case that the total area S of the explosion-proof valve 20 is constant, a situation that the opening area 24 cannot be opened normally caused by too small opening area of the opening area 24 when $S_1 < 80$ mm can be effectively avoided. Alternatively, when $S_1 > 1600 \ mm$, the opening area 24 occupies excessive area of the explosion-proof valve 20, the structural reliability of the explosion-proof valve 20 is reduced, and the opening area 24 is easily opened by mistake, thereby affecting the service life of the explosion-proof valve 20. Therefore, value ranges of $S_1$ and S are defined, so that a ratio of $S_1/S$ is within an appropriate range, which ensures that the area of the opening area 24 can meet pressure relief, and meanwhile, the structural strength of the opening area 24 is increased, thereby ensuring the stability of a connection between the opening area 24 and the explosion-proof valve 20.

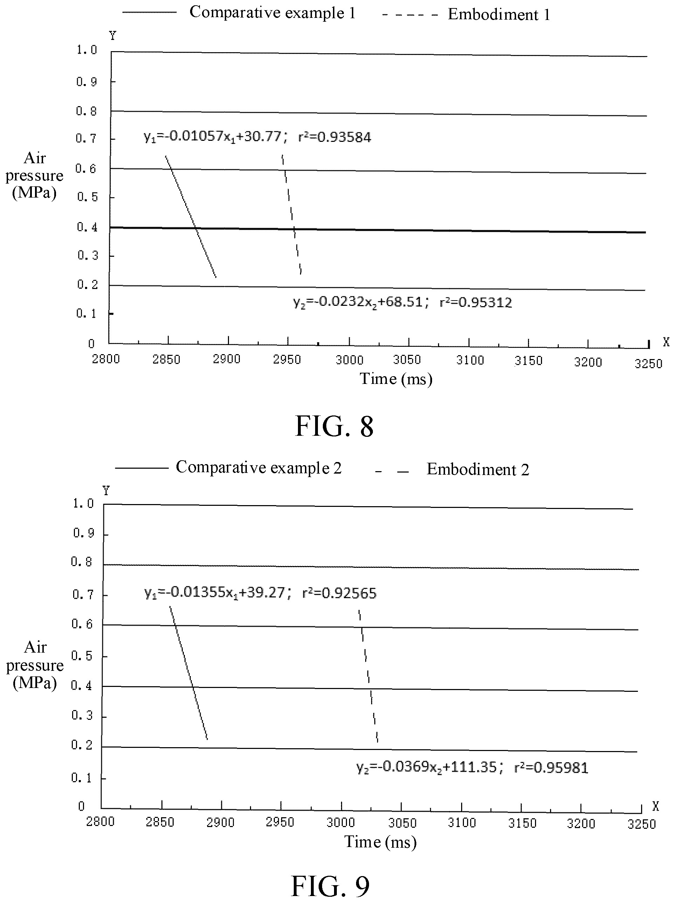

The following describes through Comparative examples 1 to 6 (that is, a related art) and Embodiments 1 to 6 (that is, the present disclosure). Batteries in Comparative examples 1 to 6 and the batteries 100 (using the explosion-proof valve 20 in the present disclosure) in Embodiments 1 to 6 are respectively tested by a method stipulated in GB/T 31485-2015, and pressure relief rate curves of the corresponding batteries 100 are recorded. The battery in the related art and the battery 100 in the embodiments are basically the same, where values of $S_1$ and S in Comparative examples 1 to 6 are selected from Table 1, values of $S_1$ and S in Embodiments 1 to 6 are selected from Table 2, and final test results are shown in FIG. 8 to FIG. 13.

Table 1

| No. | $S_1 (mm^2)$ | $S \ (mm^2)$ | $S_1/S$ |
|---|---|---|---|
| Comparative example 1 | 30 | 178.5 | 0.168067227 |
| Comparative example 2 | 160 | 800 | 0.2 |
| Comparative example 3 | 250 | 1000 | 0.25 |
| Comparative example 4 | 325 | 1300 | 0.25 |
| Comparative example 5 | 600 | 3000 | 0.2 |
| Comparative example 6 | 1050 | 5212.5 | 0.201438849 |

Table 2

| No. | $S_1 (mm^2)$ | $S(mm^2)$ | $S_1/S$ |
|---|---|---|---|
| Embodiment 1 | 80 | 178.5 | 0.448179272 |
| Embodiment 2 | 500 | 800 | 0.625 |
| Embodiment 3 | 800 | 1000 | 0.8 |
| Embodiment 4 | 1200 | 1300 | 0.923076923 |
| Embodiment 5 | 1600 | 3000 | 0.533333333 |
| Embodiment 6 | 1600 | 5212.5 | 0.306954436 |

FIG. 8 is an internal pressure change curve graph of the battery 100 when an internal pressure of the battery 100 is increased and relieved in Embodiment 1 and Comparative example 1. It can be learned from the curve graph that: within unit time, an air pressure drop change value in Embodiment 1 is greater than an air pressure drop change value in Comparative example 1. When the area S of the orthographic projection of the explosion-proof valve 20 is constant, the larger the area $S_1$ of the orthographic projection of the opening area 24, the higher a pressure relief rate within the unit time.

FIG. 9 is an internal pressure change curve graph of the battery 100 when an internal pressure of the battery 100 is increased and relieved in Embodiment 2 and Comparative example 2. It can be learned from the curve graph that: within unit time, an air pressure drop change value in Embodiment 2 is greater than an air pressure drop change value in Comparative example 2. When the area S of the orthographic projection of the explosion-proof valve 20 is constant, the larger the area $S_1$ of the orthographic projection of the opening area 24, the higher a pressure relief rate within the unit time.

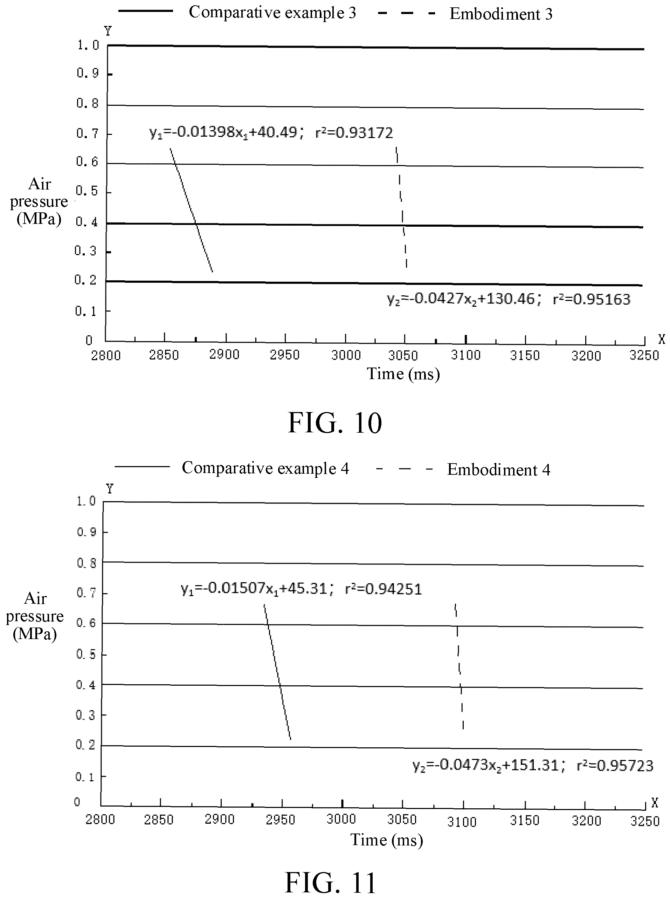

FIG. 10 is an internal pressure change curve graph of the battery 100 when an internal pressure of the battery 100 is increased and relieved in Embodiment 3 and Comparative example 3. It can be learned from the curve graph that: within unit time, an air pressure drop change value in Embodiment 3 is greater than an air pressure drop change value in Comparative example 3. When the area S of the orthographic projection of the explosion-proof valve 20 is constant, the larger the area S1 of the orthographic projection of the opening area 24, the higher a pressure relief rate within the unit time.

FIG. 11 is an internal pressure change curve graph of the battery 100 when an internal pressure of the battery 100 is increased and relieved in Embodiment 4 and Comparative example 4. It can be learned from the curve graph that: within unit time, an air pressure drop change value in Embodiment 4 is greater than an air pressure drop change value in Comparative example 4. When the area S of the orthographic projection of the explosion-proof valve 20 is constant, the larger the area $S_1$ of the orthographic projection of the opening area 24, the higher a pressure relief rate within the unit time.

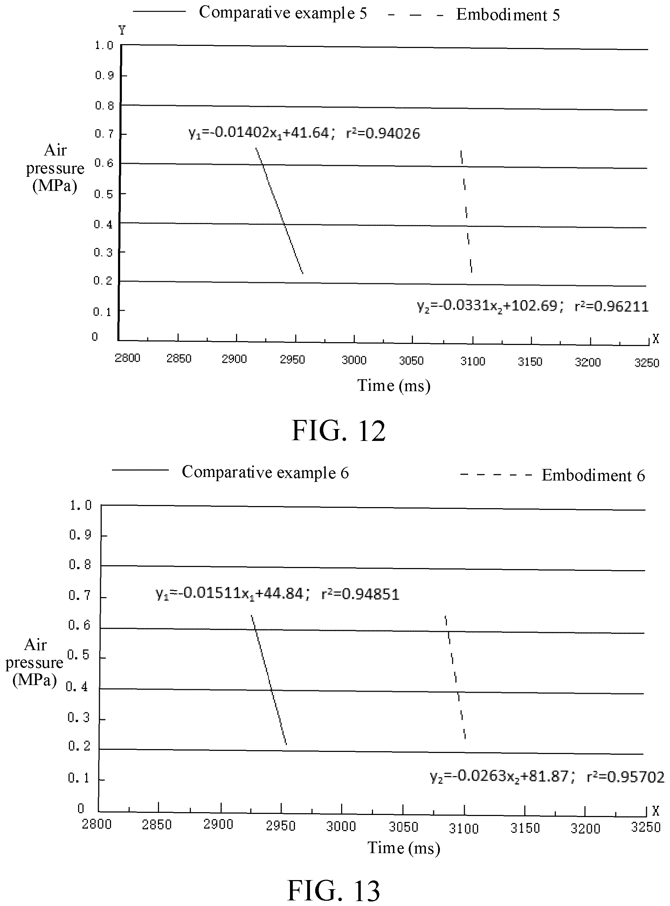

FIG. 12 is an internal pressure change curve graph of the battery 100 when an internal pressure of the battery 100 is increased and relieved in Embodiment 5 and Comparative example 5. It can be learned from the curve graph that: within unit time, an air pressure drop change value in Embodiment 5 is greater than an air pressure drop change value in Comparative example 5. When the area S of the orthographic projection of the explosion-proof valve 20 is constant, the larger the area $S_1$ of the orthographic projection of the opening area 24, the higher a pressure relief rate within the unit time.

FIG. 13 is an internal pressure change curve graph of the battery 100 when an internal pressure of the battery 100 is increased and relieved in Embodiment 6 and Comparative example 6. It can be learned from the curve graph that: within unit time, an air pressure drop change value in Embodiment 6 is greater than an air pressure drop change value in Comparative example 6. When the area S of the orthographic projection of the explosion-proof valve 20 is constant, the larger the area $S_1$ of the orthographic projection of the opening area 24, the higher a pressure relief rate within the unit time.

Therefore, in combination with Embodiment 1 to Embodiment 6, within the value range of $S_1/S$ protected by a technical solution of the present disclosure, air displacement of the explosion-proof valve 20 within the unit time can be effectively improved, and the area of the opening area 24 can meet a pressure relief requirement, thereby improving the safety of the battery 100 using the explosion-proof valve 20.

In some embodiments, the notch groove 25 is a C-shaped notch groove, an X-shaped notch groove, a Y-shaped notch groove, or a dual Y-shaped notch groove. Styles of the notch groove 25 are not limited to above shapes, and may be the notch groove 25 in any shape. The notch groove 25 may be designed according to requirements to meet different use scenarios, and the notch groove 25 may extend along a circumferential direction of the explosion-proof valve.

According to some specific embodiments of the present disclosure, in combination with FIG. 4 and FIG. 5, the notch groove 25 is a C-shaped notch groove. The notch groove 25 includes two arc-shaped first notch sections 251 arranged opposite to each other, a linear second notch section 252, and two linear third notch sections 253 spaced away from each other. The second notch section 252 and the third notch sections 253 are arranged in parallel. Two ends of the second notch section 252 are respectively connected to the two first notch sections 251. Each of the third notch sections 253 is connected to the corresponding first notch section 251. In other words, the second notch section 252 is connected to one end of each of the two first notch sections 251, the other ends of the two first notch sections 251 are respectively connected to one third notch sections 253, and the two third notch sections 253 are spaced away from each other. In the depth direction of the notch groove 25, two free ends of the outer edge of the orthographic projection of the notch groove 25 are connected to form a connection line 263. That is, a connection line between edges of the sides, far away from a center of the explosion-proof valve, of the two third notch sections 253 is the connection line 263. The connection line 263 and the outer edge of the orthographic projection of the notch groove 25 form the preset opening boundary 241 together. At this moment, the area of an area defined in the preset opening boundary 241 (that is, in the depth direction of the notch groove 25, the area of the orthographic projection of the opening area 24) is $S_c$, $$S_c = a_1 \times b_1 + \pi \times b_1^2/4$$, a total length of the notch groove 25 is $L_c$, and $L_c = 2a_1 - c_1 + \pi b_1$, where, $a_1$ represents a length of the second notch section 252, $b_1$ represents a distance between an outer side of the second notch section 252 and an outer side of the third notch section 253, and $c_1$ represents a distance between the two third notch sections 253, that is, a length of the connection line 263.

Further, a cross section of the foregoing notch groove 25 may be a rectangle, or may be an inverted trapezoid. The "cross section" here refers to: a plane parallel to the depth direction of the notch groove 25. When the cross section of the notch groove 25 is the inverted trapezoid, a width of the notch groove 25 gradually decreases along a direction towards the groove bottom of the notch groove 25. At this moment, $a_1$ may be understood as the length of the outer edge of the second notch section 252 located at a groove top or an opening, and $b_1$ may be understood as a diameter of the outer edge of the arc-shaped first notch section 251 located at the groove top or the opening. In other words, in the depth direction of the notch groove 25 (that is, in the direction from a groove opening to the groove bottom of the notch groove 25), the outer edge of the orthographic projection of the notch groove 25 includes two opposite semicircles, $a_1$ may be understood as a distance between the centers of the two semicircles, and $b_1$ may be understood as a diameter of a semicircle.

Optionally, as shown in FIG. 5, the notch groove 25 is a C-shaped notch groove, and the opening area 24 is provided with an X-shaped notch groove that achieves a structure reinforcement effect. The X-shaped notch groove includes two arc-shaped eighth notch sections 260. The two eighth notch sections 260 are symmetrically arranged in a width direction of the explosion-proof valve (for example, an up-down direction in FIG.5), and vertexes of the two eighth notch sections 260 overlap. Two ends of one of the eighth notch sections 260 may extend and respectively press against the third notch section 253, and two ends of the other eighth notch section 260 may extend and press against the second notch section 252. In the depth direction of the notch groove 25, the thickness of the opening area 24 corresponding to the eighth notch section 260 may be greater than the thickness of the opening area 24 corresponding to the second notch section 252. At this moment, the area of the area defined in the preset opening boundary 241 (that is, in the depth direction of the notch groove 25, the area of the orthographic projection of the opening area 24) is $S_x$,

$$S_x = S_c = a_2 \times b_2 + \pi \times b_2^2/4$$

, a total length of the notch groove 25 is $L_x$, and $L_x = L_c = 2a_2 - C_2 + \pi b_2$, where, $a_2$ represents a length of the second notch section 252, and $b_2$ represents a distance between an outer side of the second notch section 252 and an outer side of the third notch section 253.

Further, a cross section of the foregoing notch groove 25 may be a rectangle, or may be an inverted trapezoid. The "cross section" here refers to: a plane parallel to the depth direction of the notch groove 25. When the cross section of the notch groove 25 is the inverted trapezoid, a width of the notch groove 25 gradually decreases along a direction towards the groove bottom of the notch groove 25. At this moment, $a_2$ may be understood as a length of the outer edge of the second notch section 252 located at the groove top or an opening, and $b_2$ may be understood as a diameter of the outer edge of the eighth notch section 260 located at the groove top or the opening. In other words, in the depth direction of the notch groove 25 (that is, in the direction from the groove opening to the groove bottom of the notch groove 25), the outer edge of the orthographic projection of the notch groove 25 includes two opposite semicircles, $b_2$ may be understood as a diameter of a semicircle, and $a_2$ may be understood as a distance between the centers of the two semicircles.

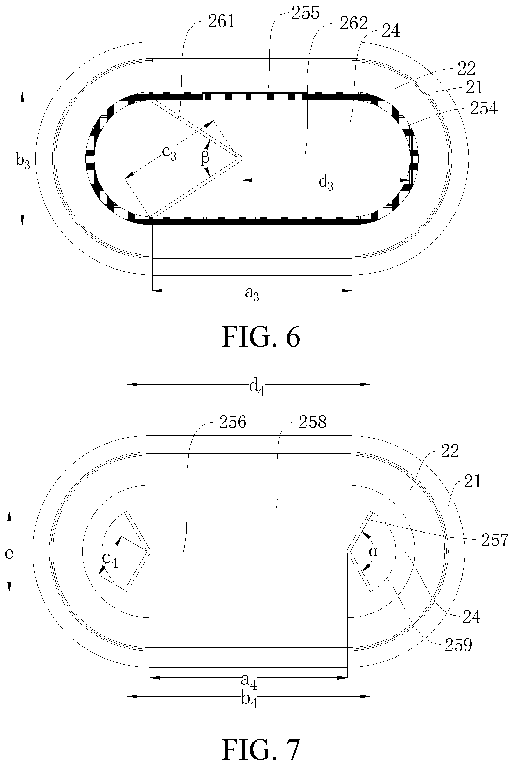

In some embodiments, as shown in FIG. 6, the notch groove 25 is an annular notch groove. The opening area 24 is provided with a Y-shaped notch groove that achieves a structure reinforcement effect. The Y-shaped notch groove is located on an inner side of the annular notch groove and is connected to the annular notch groove. For example, the annular notch groove includes two arc-shaped fourth notch sections 254 arranged opposite to each other, and two linear fifth notch sections 255 spaced away from each other. Two ends of each of the fifth notch sections 255 are respectively connected to the two fourth notch sections 254, and the two fifth notch sections 255 and the two fourth notch sections 254 form a closed ring structure. In the depth direction of the notch groove 25, the outer edge of the orthographic projection of the notch groove 25 forms the preset opening boundary 241. The preset opening boundary 241 may be enclosed by edges of the sides, far away from a center of the explosion-proof valve, of the two fifth notch section 255 and the two fourth notch sections 254.

The Y-shaped notch groove includes two linear ninth notch sections 261, and a linear tenth notch section 262. One end of each of the two ninth notch sections 261 is connected to the tenth notch section 262. An included angle β is formed between the two ninth notch sections 261. The other ends of the two ninth notch sections 261 may be respectively connected to one fifth notch section 255. The other end of the tenth notch section 262 may be connected to the fourth notch section 254. The thickness corresponding to the Y-shaped notch groove may be greater than the thickness corresponding to the annular notch groove in the opening area 24, that is, the depth of the Y-shaped notch groove is less than the depth of the annular notch groove. When an internal pressure of the battery 100 is increased, the opening area 24 protrudes outwards under an action of the internal pressure. The Y-shaped notch groove may deform to resist deformation of the opening area 24, so as to improve the structural strength and the deformation resistance of the opening area 24, thereby effectively preventing the explosion-proof valve from being opened by mistake. At this moment, the area of the area defined in the preset opening boundary 241 (that is, in the depth direction of the notch groove 25, the area of the orthographic projection of the opening area 24) is $S_y$, $S_y = a_3 \times b_3 + \pi \times b_3^2/4$, a total length of the notch groove 25 is $L_y$, and $L_y = 2c_3 + d_3$, where, $a_3$ represents a length of the fifth notch section 255, and $b_3$ represents a distance between outer sides of the two opposite fifth notch sections 255.

Further, a cross section of the foregoing notch groove 25 may be a rectangle, or may be an inverted trapezoid. The "cross section" here refers to: a plane parallel to the depth direction of the notch groove 25. When the cross section of the notch groove 25 is the inverted trapezoid, a width of the notch groove 25 gradually decreases along a direction towards the groove bottom of the notch groove 25. At this moment, $a_3$ may be understood as a length of the outer edge of the fifth notch section 255 located at the groove top or the opening, and $b_3$ may be understood as a diameter of the outer edge of the fourth notch section 254 located at the groove top or the opening. In other words, in the depth direction of the notch groove 25 (that is, in the direction from the groove opening to the groove bottom of the notch groove 25), the outer edge of the orthographic projection of the notch groove 25 includes two opposite semicircles, $b_3$ may be understood as a diameter of the semicircle, and $a_3$ may be understood as a distance between the centers of the two semicircles.

In some embodiments, referring to FIG. 7, the notch groove 25 is a dual Y-shaped notch groove. When the internal pressure of the battery 100 is increased and needs to be relieved, the internal pressure may be relieved from the dual Y-shaped notch groove, so that the opening area 24 overturns to the support section to achieve pressure relief. For example, the dual Y-shaped notch groove includes a linear sixth notch section 256 and four linear seventh notch sections 257. Two ends of the sixth notch section 256 are respectively connected to two seventh notch sections 257 arranged at a preset included angle. In the depth direction of the notch groove 25, a first arc 259 is defined between free ends of orthographic projections of the two seventh notch sections 257 located at the same end of the sixth notch section 256. The first arc 259 takes a vertex of the preset included angle of the two seventh notch sections 257 as a center of a circle. A first straight line 258 is defined between the free ends of the orthographic projections of the two seventh notch sections 257 located on the same side of the sixth notch section 256. The two first arcs 259 and the two first straight lines 258 form the preset opening boundary 241 together. It is to be noted that, since widths of the sixth notch section 256 and the seventh notch section 257 are relatively small and may be negligible, the first arc 259 and the first straight line 258 may approximately intersect at one point. The first arc 259 may be understood as: being defined by free ends of the sides that are close to each other of the orthographic projections of the two seventh notch sections 257 located at the same end of the sixth notch section 256. The first straight line 258 may be understood as: being defined by free ends of the sides, close to each other, of the orthographic projections of the two seventh notch sections 257 located at the same side of the sixth notch section 256.

It may be understood that the free end of the seventh notch section 257 refers to an end, far away from the sixth notch section 256, of the seventh notch section 257. As shown in FIG. 7, along a direction from left to right, the two seventh notch sections 257 located at a left end of the sixth notch section 256 get close to each other to form a connection with the sixth notch section 256, and the two seventh notch sections 257 located at a right end of the sixth notch section 256 extend in directions away from each other. At this moment, the area of the area defined in the preset opening boundary 241 (that is, in the depth direction of the notch groove 25, the area of the orthographic projection of the opening area 24) is $S_{dual\text{-}y}$,

$$S_{dual-y} = \frac{(a_4+b_4)\times c_4\sqrt{2(1-\cos\alpha)}}{2} + \frac{\pi c_4{}^2\alpha}{180}$$

, and a total length of the notch groove 25 is $L_{dual\text{-}y} = a_4 + 4c_4$, where, $a_4$ represents a length of the sixth notch section 256, $b_4$ represents a distance between the free ends of the two seventh notch sections 257 located on the same side of the sixth notch sections 256, $c_4$ represents a length of the seventh notch section 257, e represents a distance between two first straight lines 258, and $d_4$ represents a length of the first straight line 258.

Therefore, different shapes of notch grooves 25 may change the structural strength of the opening area 24, and an appropriate notch groove 25 may be selected according to different design standards, which reduces process difficulties of the explosion-proof valve to improve the pressure relief speed of the explosion-proof valve and the safety performance of the battery 100.

Further, a cross section of the foregoing notch groove 25 may be a rectangle, or may be an inverted trapezoid. The "cross section" here refers to: a plane parallel to the depth direction of the notch groove 25. When the cross section of the notch groove 25 is the inverted trapezoid, a width of the notch groove 25 gradually decreases along a direction towards the groove bottom of the notch groove 25. At this moment, $a_4$ may be understood as a length of the outer edge of the sixth notch section 256 located at the groove top or the opening, $b_4$ is a distance between the free ends, located at the groove top or the opening, of the two seventh notch sections 257 located on the same side of the sixth notch section 256, and $c_4$ is a length of the seventh notch section 257 located at the groove top or the opening.

In some embodiments, in the depth direction of the notch groove 25, the shape of the orthographic projection of the opening area 24 is oval, elliptical, or polygonal. Therefore, different shapes of opening areas 24 may be selected according to different use scenarios of the explosion-proof valve 20, so as to meet different opening requirements, and increase the practicability of the explosion-proof valve 20.

In some embodiments, as shown in FIG. 2 and FIG. 4, in the depth direction of the notch groove 25, the outer contour of the orthographic projection of the explosion-proof valve 20 includes two second straight lines 27 arranged in parallel, and two second arcs 28 arranged opposite to each other. Two ends of each of the two second straight lines 27 are respectively connected to the two second arcs 28. A length of the second straight line 27 is L, a radius of each second arc 28 is R, a distance between the two second straight lines 27 is 2R, and S, *L*, and R meet: S = $\pi R^2$ + 2RL, 10 $mm \le L \le 65$ $mm$, and 5 $mm \le R \le 25$ $mm.$ Optionally, $L = 30$ $mm,$ and R = 50 $mm.$ Therefore, the shape of the explosion-proof valve 20 is defined, so that the explosion-proof valve 20 can be appropriately mounted on a battery casing 10, thereby relieving the internal pressure of the battery 100. After the explosion-proof valve 20 is welded and fixed to the battery casing 10, a welding seam will be formed between the explosion-proof valve 20 and the casing. Alternately, after the explosion-proof valve 20 is welded and fixed to a cover plate of the battery 100, a welding seam will be formed between the explosion-proof valve 20 and the cover plate. The outer edge of the explosion-proof valve 20 is at half of a width of the welding seam. The width of the welding seam refers to a distance between the outer contour and the inner contour of the orthographic projection of the welding seam in the depth direction of the notch groove.

In some embodiments, in the depth direction of the notch groove 25, the thickness of the opening area 24 is less than the thicknesses of other parts of the explosion-proof valve 20. That is, the thickness of the opening area 24 along a direction of a central axis of the explosion-proof valve 20 is less than the thicknesses of other parts (for example, a support section 22 mentioned hereinafter) of the explosion-proof valve 20. Therefore, the thickness of the opening area 24 is less than the thicknesses of other parts of the explosion-proof valve 20, so as to achieve thinning treatment on the opening area 24, facilitate opening of the opening area 24, and avoid too thick thickness of the opening area 24 to affect normal opening of the explosion-proof valve 20.

In some embodiments, as shown in FIG. 3, in the depth direction of the notch groove 25, the thickness of the opening area 24 is $H_1$, and $H_1$ meets: 0.1 mm $\leq H_1 \leq$ 0.3 *mm.* Therefore, the thickness of the opening area 24 is controlled, so that the thickness of the opening area 24 can meet requirements of a product design, and smooth opening of the opening area 24 is facilitated, thereby ensuring the use safety of the explosion-proof valve 20.

In some embodiments, as shown in FIG. 3, the explosion-proof valve 20 further includes a connection section 21, a buffer section 23, and a support section 22. The explosion-proof valve 20 is connected to the battery casing 10 through the connection section 21. The connection section 21 is connected to an outer peripheral side of the support section 22. The support section 22 and the connection section 21 are spaced away from each other along the thickness direction of the support section 22, and the support section 22 is located on one side, adjacent to a center of the battery casing 10, of the connection section 21. The buffer section 23 is connected between the connection section 21 and the support section 22. The opening area 24 is arranged on the support section 22.

In the thickness direction of the explosion-proof valve 20, the connection section 21 and the support section 22 may be horizontally arranged. One end of the buffer section 23 is connected to an inner peripheral side of the connection section 21, and the other end of the buffer section 23 is connected to the outer peripheral side of the support section 22. When the connection section 21 is connected to the battery casing 10, the support section 22 is arranged closer to the center of the battery casing 10 relative to the connection section 21. That is, the connection section 21, the buffer section 23, and the support section 22 form a structure that is concave towards the center of battery casing 10. Alternately, the support section 22 is arranged away from the center of the battery casing 10 relative to the connection section 21. That is, the connection section 21, the buffer section 23, and the support section 22 form a structure that is convex away from the center of battery casing 10. Through such an arrangement, an acting force on the connection section 21 may be transferred to the buffer section 23, so as to prevent the support section 22 and the opening area 24 from being stressed directly and improve the structural strength of the opening area 24 and the support section 22. In addition, the opening area 24 is formed in a middle part of the support section 22. The opening area 24 and the support section 22 may be molded integrally, or the opening area 24 and the support section 22 are welded integrally.

Therefore, the explosion-proof valve 20 includes the connection section 21 and the support section 22. The connection section 21 may achieve a fixed connection between the explosion-proof valve 20 and the battery casing 10. The support section 22 may increase the structural strength of the opening area 24, so as to prevent the opening area 24 from twisting and deforming under external force. In addition, the buffer section 23 is arranged between the connection section 21 and the support section 22, which can absorb thermal stress when the opening area 24 is welded to the support section 22, increase the reliability of the explosion-proof valve 20, and improve the safety of the explosion-proof valve 20, thereby effectively avoiding problems of fire, explosion, and the like of the battery 100. In addition, the support section 22 is arranged on one side close to the center of the battery casing 10, or is arranged on one side far away from the center of the battery casing 10, which can prevent the explosion-proof valve 20 from being opened by an impact of external force on the casing, prevent the opening area 24 from being stressed, effectively protect the explosion-proof valve 20, prolong the service life of the explosion-proof valve 20, and improve the use stability.

In some embodiments, the buffer section 23 may be vertically connected to both the connection section 21 and the support section 22. That is, the buffer section 23 is perpendicular to both the connection section 21 and the support section 22, so that horizontal stress on the connection section 21 may be converted into stress in a direction perpendicular to the connection section 21. A stress transfer direction is changed, so that the stress transfer direction is dispersed, and the stress on the support section 22 is reduced, thereby protecting the opening area 24 from being deforming under an impact of the stress. Moreover, the buffer section 23 is perpendicularly connected to the connection section 21 and the support section 22, which can improve the utilization of space of the explosion-proof valve 20.

In some embodiments, as shown in FIG. 3, a groove 221 is formed in the support section 22, and the notch groove 25 is formed in a bottom wall of the groove 221. Therefore, the protection of the support section 22 on the opening area 24 can be increased. Meanwhile, thinning treatment on the opening area 24 is achieved, so that the opening area 24 can be opened smoothly when the internal pressure of the explosion-proof valve 20 is increased and needs to be relieved, and the failure of the explosion-proof valve 20 is avoided.

In addition, in the depth direction of the notch groove 25, the thickness of the opening area 24 may be variable. For example, the thickness in a center of the opening area 24 is less than the thickness at an edge, which ensures the strength of a connection between the opening area 24 and the support section 22, and reduces the production cost of the opening area 24.

In some embodiments, in the depth direction of the notch groove 25, the outer edge of the orthographic projection of the groove 221 and the outer edge of the orthographic projection of the notch groove 25 have an overlap area. That is, the notch groove 25 is formed in the edge of the bottom wall of the groove 221. Therefore, maximum area of the opening area 24 can be ensured, which is helpful to improve the pressure relief capacity of the explosion-proof valve 20.

In some embodiments, as shown in FIG. 3, in the depth direction of the notch groove 25, the thickness of the support section 22 corresponding to the notch groove 25 is $H_2$, and $H_2$ meets: 0.02 mm $\leq H_2 \leq$ 0.2 mm. Therefore, the thickness of the support section 22 corresponding to the notch groove 25 is controlled, so that the opening area 24 can be smoothly opened from the notch groove 25 to achieve pressure relief without affecting the structural strength of the opening area 24, and the timeliness of opening the explosion-proof valve 20 is improved.

In some embodiments, in the depth direction of the notch groove 25, the thickness of the support section 22 is $H_3$, and $H_2$ and $H_3$ meet: $H_2 : H_3 = 0.1$ to 1. Therefore, the thickness of the support section 22 corresponding to the groove 221 and the thickness of the support section 22 are controlled within an appropriate ratio range, and the opening area 24 can meet a designed strength requirement of the explosion-proof valve 20. Moreover, the support section 22 can meet a structural strength requirement, and can achieve protection on the opening area 24, so as to better control the manufacturing cost of the explosion-proof valve 20.

In some embodiments, one side surface, far away from the battery casing 10, of the opening area 24 is flush with one side surface, far away from the battery casing 10, of the support section 22. A distance between one side surface, adjacent to the center of the battery casing 10, of the opening area 24 and the center of the battery casing 10 is greater than a distance between one side surface, adjacent to the center of the battery casing 10, of the support section 22 and the center of the battery casing 10.

It may be understood that, the opening area 24 is flush with a surface of the support section 22 at one side far away from the center of the battery casing 10. To ensure smooth opening of the opening area 24, the thickness of the opening area 24 is preferably set to be less than the thickness of the support section 22. At this moment, a distance between the opening area 24 and the center of the battery casing 10 is different from a distance between one side of the support section 22 adjacent to the center of the battery casing 10 and the center of the battery casing 10. A distance from the opening area 24 to the center of the battery casing 10 is greater than a distance from the support section 22 to the center of the battery casing 10. Therefore, in one aspect, an impact of electrolyte oscillating inside the battery casing 10 on the opening area 24 can be reduced, and the using cost of the battery 100 can be prevented from being increased due to pressure relief when the explosion-proof valve 20 does not reach a designed threshold. In another aspect, the thickness of the opening area 24 is relatively thin, so that smooth opening of the explosion-proof valve 20 can be facilitated, thereby further improves the safety of using the battery 100.

In some embodiments, as shown in FIG. 3, in the depth direction of the notch groove 25, the thickness of the support section 22 is $H_3$, the thickness of the connection section 21 is $H_4$, and $H_3$ and $H_4$ meet: $H_3 : H_4 = 0.25$ to 1. Therefore, the thicknesses of the support section 22 and the connection section 21 are appropriately controlled, so that $H_3 : H_4$ is within an appropriate ratio range, thereby facilitating supporting the opening area 24 by the support section 22 and connecting the explosion-proof valve 20 and the battery casing 10. Meanwhile, an excessive thickness of the explosion-proof valve 20 can be avoided, so that two sides of the explosion-proof valve 20 can be flush with an inner surface and an outer surface of the battery casing 10 when the explosion-proof valve 20 matches the battery casing 10, thereby increasing the battery core accommodating capacity of the battery casing 10.

In some embodiments, as shown in FIG. 3, in the depth direction of the notch groove 25, the height of the explosion-proof valve 20 is $H_5$. In the thickness direction of the buffer section 23 (that is, the thickness direction of the battery 100), the wall thickness of the buffer section 23 (a distance along a radial direction of the explosion-proof valve, for example, a left-right direction in FIG. 3) is $D_1$. $H_5$ and $D_1$ respectively meet: 0.3 mm $\leq H_5 \leq$ 1.5 mm, and 0.2 mm $\leq D_1 \leq$ 0.8 mm. Therefore, the height of the explosion-proof valve 20 and the wall thickness of the buffer section 23 are controlled, so that size specifications of the explosion-proof valve 20 can be better controlled when the explosion-proof valve 20 meets a buffer effect design, the reliability of the assembly between the explosion-proof valve 20 and the battery casing 10 is increased, the assembly performance is better, and an impact on mounting other parts inside the battery 100 is avoided.

In some embodiments, as shown in FIG. 2 and FIG. 3, in the thickness direction of the buffer section 23 (that is, the thickness direction of the battery 100), a width of the support section 22 is $D_2$. In the depth direction of the notch groove 25, the thickness of the support section 22 is $H_3$. $D_2$ and $H_3$ respectively meet: 0.2 mm $\leq D_2 \leq$ 2 mm, and 0.2 mm $\leq H_3 \leq$ 0.8 mm. Therefore, the width and the thickness of the support section 22 are set, so that the support section 22 can better support and protect the opening area 24 while ensuring the structural strength of the support section 22, thereby preventing the opening area 24 from deforming under stress.

In some embodiments, as shown in FIG. 2, in the thickness direction of the buffer section 23 (that is, the thickness direction of the battery 100), a width of the connection section 21 is $D_3$. In the depth direction of the notch groove 25, the thickness of the connection section 21 is $H_4$. $D_3$ and $H_4$ respectively meet: 1 mm $\leq D_3 \leq$ 5 mm, and 0.2 mm $\leq H_4 \leq$ 0.8 mm. Therefore, the thickness and the width of the connection section 21 are appropriately set, so as to improve the reliability of a connection between the connection section 21 and the battery casing 10. Meanwhile, the thickness of the connection section 21 is controlled, so that the connection section 21 can be flush with the surface of the battery casing 10 as much as possible when connected to one side of the battery casing 10, thereby reducing the occupation of internal space of the battery casing 10 and facilitating the arrangement of elements inside the battery casing 10.

A battery 100 according to an embodiment in a second aspect of the present disclosure includes a battery casing 10 and an explosion-proof valve 20.

Specifically, as shown in FIG. 1 to FIG. 3, and FIG. 14, the explosion-proof valve 20 is arranged on the battery casing 10. Therefore, the explosion-proof valve 20 according to the embodiment in the foregoing first aspect of the present disclosure is used, so that an internal pressure can be relieved in time after the battery 100 is damaged, the protection on the battery 100 is increased, the using safety of the battery 100 is improved, and the cost of using the battery 100 is reduced.

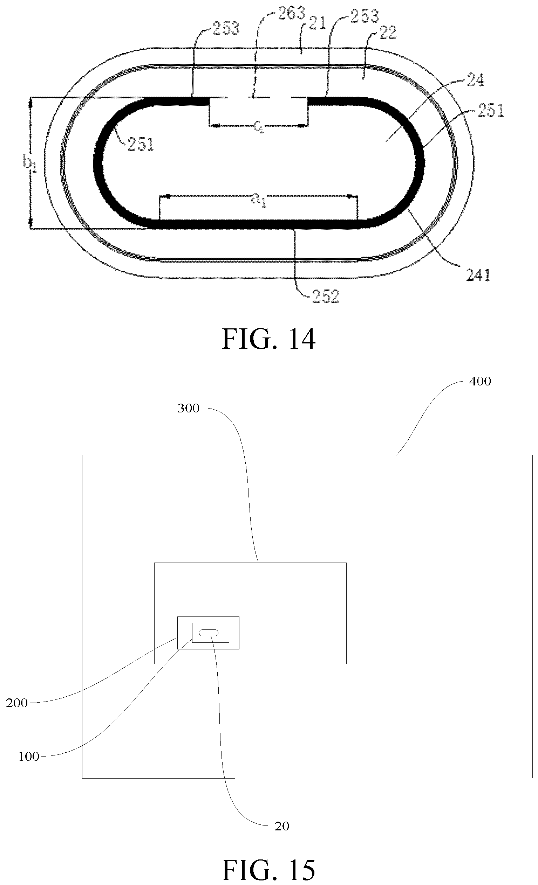

A battery module 200 according to an embodiment in a third aspect of the present disclosure, referring to FIG. 15, includes the battery 100 according to the embodiment in the foregoing second aspect of the present disclosure.

The battery module 200 includes two end plates (not shown in the figure) and two side plates (not shown in the figure). Multiple batteries 100 are sequentially arranged to form a battery array. The two end plates are arranged at two opposite ends of the battery array, and the two side plates are arranged on two opposite sides of the battery array. For example, the multiple batteries 100 included in the battery array are sequentially arranged along the thickness direction of the battery 100. The two ends plates may be distributed at two ends of the battery array along the thickness direction of the battery 100. The two side plates may be distributed on two sides of the battery array along a length direction or a width direction of the battery 100.

In combination with FIG. 1 to FIG. 3, an opening is formed in the battery casing 10, and the explosion-proof valve 20 may be arranged on one side of the opening of the battery casing 10. The connection section 21 of the explosion-proof valve 20 may be connected to the battery casing 10 by welding. The buffer section 23 is located in the opening, and is opposite to the opening in the radial direction. The support section 22 is connected to one end, far away from the connection section 21, of the buffer section 23, and a surface of one side, adjacent to a center of the battery casing 10, of the support section 22 is flush with an inner surface of one side provided with the opening of the battery casing 10. Therefore, the area of the opening area 24 and the explosion-proof valve 20 may be controlled, so that the opening area of the opening area 24 is maximized, and the safety of using the battery 100 is further improved.

When the battery 100 is subjected to external force or internal stress, the buffer section 23 may absorb deformation stress, and convert a force of the connection section 21 in a horizontal direction into a force in a direction perpendicular to the support section 22, which prevents the stress from concentrating excessively to affect stability of the opening area 24 and damage a structure of the notch groove 25. Moreover, the notch groove 25 can be prevented from deforming under stress, and an impact of external force (for example, the stress generated by thermal deformation of the explosion-proof valve 20 during welding) on an opening pressure of the explosion-proof valve 20 is reduced.

Therefore, the explosion-proof valve 20 is used, the opening area 24 can be opened in time to relieve a pressure, thereby increasing the safety of using the battery 100. In addition, the buffer section 23 of the explosion-proof valve 20 is designed, which achieves absorption of the stress and a change of a transfer direction, reduces an impact of the external force on the opening area 24, and prolongs the service life of the battery 100.

A battery pack 300 according to an embodiment in a fourth aspect of the present disclosure, referring to FIG. 15, includes the battery 100 according to the embodiment in the foregoing second aspect of the present disclosure, or the battery module 200 according to the embodiment in the foregoing third aspect of the present disclosure.

The battery pack 300 includes a tray (not shown in the figure). The tray is fixed to a vehicle 400. The battery 100 according to the embodiment in the foregoing second aspect is directly arranged in the tray, or the battery module 200 according to the embodiment in the foregoing third aspect is fixed to an interior of the tray.

Therefore, an area ratio of the opening area 24 to the explosion-proof valve 20 is controlled, so that the safety of using the battery 100 can be improved, and the using safety of the battery module 200 and the battery pack 300 can be improved. The explosion-proof valve 20 of the battery 100 inside the battery module 200 may be arranged close to a bottom of the battery module 200, so that an air flow can be prevented from rushing into a vehicle body when the battery 100 is heated and is subjected to pressure relief, thereby avoiding secondary damage and improving the stability of using the battery pack 300.

A vehicle 400 according to an embodiment in a fifth aspect of the present disclosure, referring to FIG. 15, includes the battery pack 300 according to the embodiment in the foregoing fourth aspect of the present disclosure.

Therefore, the possibility of explosion and combustion of the vehicle 400 can be reduced, and the possibility of opening the explosion-proof valve 20 caused by deformation of the opening area 24 in a case that the battery pack 300 is subjected to an external impact and the like is reduced. Moreover, the buffer section 23 may absorb partial stress and change a force transfer direction, so that the battery pack 300 has good reliability, thereby reducing the using cost of the vehicle 400.

In the description of the present disclosure, it is to be understood that orientation or position relationships indicated by the terms such as "center", "longitudinal", "transverse", "length", "width", "thickness", "upper", "lower", "front", "back", "left", "right", "vertical", "horizontal", "top", "bottom", "inner", "outer", "clockwise", "anticlockwise", "axial", "radial", and "circumferential" are based on orientation or position relationships shown in the accompanying drawings, and are used only for describing the present disclosure and simplifying a description rather than indicating or implying that the referred apparatus or element has to have a particular orientation or has to be constructed and operated in a particular orientation. Therefore, such terms cannot be construed as a limitation to the present disclosure.

In the description of the present disclosure, "a first feature" or "a second feature" may include one or more of the features. In the description of the present disclosure, "multiple" means two or more. In the description of the present disclosure, a first feature is "on" or "below" a second feature may include that the first and second features are in direct contact, or may include that the first and second features are not in direct contact but in contact through additional features between the first feature and the second feature. In the description of the present disclosure, a first feature is "on", "above", or "over" a second feature includes that the first feature is right above and on the inclined top of the second feature or merely indicates that a level of the first feature is higher than that of the second feature.

In the description of this specification, the descriptions of reference terms such as "an embodiment", "some embodiments", "exemplary embodiments", "example", "specific example", or "some examples" mean that specific features, structures, materials or characteristics described with reference to the embodiment or example are included in at least one embodiment or example of the present disclosure. In this specification, exemplary expressions of the foregoing terms do not necessarily refer to the same embodiment or example.

Although embodiments of the present disclosure have been shown and described, those of ordinary skill in the art may understand that: various changes, modifications, replacements, and variations may be made to these embodiments without departing from the principles and spirit of the present disclosure, and the scope of the present disclosure is as defined by appended claims and equivalents of the appended claims.

**Claims**

1. An explosion-proof valve (20), wherein the explosion-proof valve (20) is provided with a notch groove (25), the explosion-proof valve (20) comprises an opening area (24), in the depth direction of the notch groove (25), a shape of an orthographic projection of the opening area (24) is non-circular, an outer edge of the orthographic projection of the opening area (24) is a preset opening boundary (241), an area of the orthographic projection of the opening area (24) is $S_1$, an area of the orthographic projection of the explosion-proof valve (20) is S, and $S_1$ and S meet: $S_1/S \geq 0.3$, wherein the units of $S_1$ and S are both $mm^2$.

2. The explosion-proof valve (20) according to claim 1, wherein $S_1$ and S further meet: $S_1/S \leq 0.95$.

3. The explosion-proof valve (20) according to claim 1 or 2, wherein $S_1$ and S respectively meet: $80 \ mm^2 \leq S_1 \leq 1600 \ mm^2$, and $178.5 \ mm^2 \leq S \leq 5212.5 \ mm^2$.

4. The explosion-proof valve (20) according to any one of claims 1 to 3, wherein the notch groove (25) comprises two arc-shaped first notch sections (251) arranged opposite to each other, a linear second notch section (252), and two linear third notch sections (253) spaced away from each other, the second notch section (252) and the third notch sections (253) are arranged in parallel, two ends of the second notch section (252) are respectively connected to the two first notch sections (251), and each of the third notch sections (253) is connected to the corresponding first notch section (251); and
in the depth direction of the notch groove (25), two free ends of an outer edge of an orthographic projection of the notch groove (25) are connected to form a connection line (263), and the connection line (263) and the outer edge of the orthographic projection of the notch groove (25) form the preset opening boundary (241) together.

5. The explosion-proof valve (20) according to any one of claims 1 to 3, wherein the notch groove (25) comprises two arc-shaped fourth notch sections (254) arranged opposite to each other, and two linear fifth notch sections (255) arranged in parallel, two ends of each of the fifth notch sections (255) are respectively connected to the two fourth notch sections (254), and the two fifth notch sections (255) and the two fourth notch sections (254) form a closed ring structure; and
in the depth direction of the notch groove (25), the outer edge of the orthographic projection of the notch groove (25) forms the preset opening boundary (241).

6. The explosion-proof valve (20) according to any one of claims 1 to 3, wherein the notch groove (25) comprises a linear sixth notch section (256) and four linear seventh notch sections (257), two ends of the sixth notch section (256) are respectively connected to two seventh notch sections (257), and the two of the seventh notch sections (257) are connected at a preset included angle; and
in the depth direction of the notch groove (25), a first arc (259) is defined between free ends of orthographic projections of the two seventh notch sections (257) located at a same end of the sixth notch section (256), the first arc (259) takes a vertex of the preset included angle as a center of a circle, a first straight line (258) is defined between the free ends of the orthographic projections of the two seventh notch sections (257) located on a same side of the sixth notch section (256), and the two first arcs (259) and the two first straight lines (258) form the preset opening boundary (241) together.

7. The explosion-proof valve (20) according to any one of claims 1 to 6, wherein in the depth direction of the notch groove (25), an outer contour of the orthographic projection of the explosion-proof valve (20) comprises two second straight lines (27) arranged in parallel and two second arcs (28) arranged opposite to each other, two ends of each of the two second straight lines (27) are respectively connected to the two second arcs (28), a length of the second straight line (27) is L, a radius of each of the second arcs (28) is R, a distance between the two second straight lines (27) is 2R, and S, $L$, and R meet: $S = \pi R^2 + 2RL$, 10 mm$\leq L \leq$65 mm, and 5 mm$\leq R \leq$25 mm.

8. The explosion-proof valve (20) according to any one of claims 1 to 7, wherein in the depth direction of the notch groove (25), a thickness of the opening area (24) is less than a thicknesses of other parts of the explosion-proof valve (20).

9. The explosion-proof valve (20) according to any one of claims 1 to 8, wherein in the depth direction of the notch groove (25), a thickness of the opening area (24) is $H_1$, and $H_1$ meets: $0.1$ mm $\leq H_1 \leq 0.3$ mm.

10. The explosion-proof valve (20) according to any one of claims 1 to 9, wherein in the depth direction of the notch groove (25), the shape of the orthographic projection of the opening area (24) is oval, elliptical, or polygonal.

11. The explosion-proof valve (20) according to any one of claims 1 to 10, wherein the explosion-proof valve (20) further comprising a connection section (21), a buffer section (23), and a support section (22), the connection section (21) being connected to an outer peripheral side of the support section (22), the support section (22) and the connection section (21) being spaced away along a thickness direction of the support section (22), the buffer section (23) being connected between the connection section (21) and the support section (22), and the opening area (24) being arranged on the support section (22).

12. The explosion-proof valve (20) according to claim 11, wherein a groove (221) is formed in the support section (22), and the notch groove (25) is formed in a bottom wall of the groove (221).

13. The explosion-proof valve (20) according to claim 12, wherein in the depth direction of the notch groove (25), an outer edge of an orthographic projection of the groove (221) and an outer edge of an orthographic projection of the notch groove (25) have an overlap area.

14. The explosion-proof valve (20) according to any one of claims 11 to 13, wherein in the depth direction of the notch groove (25), a thickness of the support section (22) corresponding to the notch groove (25) is $H_2$, and $H_2$ meets: $0.02$ mm $\leq H_2 \leq 0.2$ mm.

15. The explosion-proof valve (20) according to claim 14, wherein in the depth direction of the notch groove (25), a thickness of the support section (22) is $H_3$, and $H_2$ and $H_3$ meet: $H_2$: $H_3 = 0.1$ to $1$.

16. The explosion-proof valve (20) according to any one of claims 11 to 15, wherein in the depth direction of the notch groove (25), a thickness of the support section (22) is $H_3$, a thickness of the connection section (21) is $H_4$, and $H_3$ and $H_4$ meet: $H_3$: $H_4 = 0.25$ to $1$.

17. The explosion-proof valve (20) according to any one of claims 11 to 16, wherein in the depth direction of the notch groove (25), a height of the explosion-proof valve (20) is $H_5$, in the thickness direction of the buffer section (23), a wall thickness of the buffer section (23) is $D_1$, and $H_5$ and $D_1$ respectively meet: $0.3$ mm $\leq H_5 \leq 1.5$ mm, and $0.2$ mm $\leq D_1 \leq 0.8$ mm.

18. The explosion-proof valve (20) according to any one of claims 11 to 17, wherein in the thickness direction of the buffer section (23), a width of the support section (22) is $D_2$, in the depth direction of the notch groove (25), a thickness of the support section (22) is $H_3$, and $D_2$ and $H_3$ respectively meet: $0.2$ mm $\leq D_2 \leq 2$ mm, and $0.2$ mm $\leq H_3 \leq 0.8$ mm.

19. The explosion-proof valve (20) according to any one of claims 11 to 18, wherein in the thickness direction of the buffer section (23), a width of the connection section (21) is $D_3$, in the depth direction of the notch groove (25), a thickness of the connection section (21) is $H_4$, and $D_3$ and $H_4$ respectively meet: $1$ mm $\leq D_3 \leq 5$ mm, and $0.2$ mm $\leq H_4 \leq 0.8$ mm.

20. A battery (100), comprising:

a battery casing (10); and
the explosion-proof valve (20) according to any one of claims 1 to 19, the explosion-proof valve (20) being arranged on the battery casing (10).

21. A battery module (200), comprising the battery (100) according to claim 20.

22. A battery pack (300), comprising the battery (100) according to claim 20, or the battery module (200) according to claim 21.

23. A vehicle (400), comprising: the battery pack (300) according to claim 22.

FIG. 1

FIG. 2

FIG. 3

FIG. 4

FIG. 5

FIG. 6

FIG. 7

———— Comparative example 1     - - - - Embodiment 1

$y_1 = -0.01057x_1 + 30.77$; $r^2 = 0.93584$

$y_2 = -0.0232x_2 + 68.51$; $r^2 = 0.95312$

Air pressure (MPa)

Time (ms)

## FIG. 8

———— Comparative example 2     - — Embodiment 2

$y_1 = -0.01355x_1 + 39.27$; $r^2 = 0.92565$

$y_2 = -0.0369x_2 + 111.35$; $r^2 = 0.95981$

Air pressure (MPa)

Time (ms)

## FIG. 9

FIG. 10

FIG. 11

FIG. 12

FIG. 13

FIG. 14

FIG. 15

# EP 4 525 167 A1

## INTERNATIONAL SEARCH REPORT

International application No.

**PCT/CN2023/089162**

### A. CLASSIFICATION OF SUBJECT MATTER

H01M50/342(2021.01)i; H01M50/249(2021.01)i; H01M50/258(2021.01)i

According to International Patent Classification (IPC) or to both national classification and IPC

### B. FIELDS SEARCHED

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

DWPI, CNKI, CNTXT, ENTXT, ENTXTC: 阀, 防爆阀, 厚度, 面积, 深, 刻痕, 槽, "0.1mm: 0.3mm", valve, explosion valve, thickness, area, deep, score, groove

### C. DOCUMENTS CONSIDERED TO BE RELEVANT

| Category* | Citation of document, with indication, where appropriate, of the relevant passages | Relevant to claim No. |
|---|---|---|
| Y | CN 112382826 A (SVOLT ENERGY TECHNOLOGY CO., LTD.) 19 February 2021 (2021-02-19)<br>description, paragraphs 3-61, figures 1-10 | 1-12, 20-23 |
| Y | CN 114122613 A (SUZHOU LINGPAI NEW ENERGY TECHNOLOGY CO., LTD. ET AL.) 01 March 2022 (2022-03-01)<br>description, paragraphs 5-59, and figures 1-2 | 4, 7-12, 20-23 |
| Y | CN 111446388 A (SUNWODA ELECTRIC VEHICLE BATTERY CO., LTD.) 24 July 2020 (2020-07-24)<br>description, paragraphs 4-43, and figures 1-6 | 11-12, 20-23 |
| A | JP 2010238558 A (SANYO ELECTRIC CO., LTD.) 21 October 2010 (2010-10-21)<br>entire document | 1-23 |
| PX | CN 216980795 U (BYD CO., LTD.) 15 July 2022 (2022-07-15)<br>description, paragraphs 3-104, and figures 1-13 | 1-23 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **19 June 2023** | **20 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/089162**

| Patent document cited in search report | | | Publication date (day/month/year) | Patent family member(s) | | | Publication date (day/month/year) |
|---|---|---|---|---|---|---|---|
| CN | 112382826 | A | 19 February 2021 | CN | 112382826 | B | 20 April 2021 |
| | | | | CN | 214013101 | U | 20 August 2021 |
| | | | | WO | 2022152042 | A1 | 21 July 2022 |
| CN | 114122613 | A | 01 March 2022 | CN | 217214995 | U | 16 August 2022 |
| CN | 111446388 | A | 24 July 2020 | CN | 212161868 | U | 15 December 2020 |
| JP | 2010238558 | A | 21 October 2010 | None | | | |
| CN | 216980795 | U | 15 July 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202221128849